(19) Europäisches Patentamt
European Patent Office
Office européen des brevets

(11) **EP 2 302 552 B1**

(12) **FASCICULE DE BREVET EUROPEEN**

(45) Date de publication et mention
de la délivrance du brevet:
**06.12.2017 Bulletin 2017/49**

(51) Int Cl.:
***G06F 21/75*** *(2013.01)*

(21) Numéro de dépôt: **10179631.6**

(22) Date de dépôt: **24.09.2010**

(54) **Procédé d'éxecution d'un algorithme de protection d'un dispositif électronique par masquage affiné et dispositif associé**

Verfahrung zur Ausführung eines Algorithmus zum Schutz einer elektronischen Vorrichtung durch Feinverschleierung, und entsprechende Vorrichtung

Method for running a protection algorithm of an electronic device by affine masking and associated device

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.09.2009 FR 0904642**

(43) Date de publication de la demande:
**30.03.2011 Bulletin 2011/13**

(73) Titulaires:
• **Thales**
**92400 Courbevoie (FR)**
• **Oberthur Technologies**
**92700 Colombes (FR)**

(72) Inventeurs:
• **Fumaroli, Guillaume**
**75015, Paris (FR)**
• **Lachartre, Sylvain**
**92250, La Garenne Colombes (FR)**
• **Martinelli, Jean**
**75010, Paris (FR)**
• **Prouff, Emmanuel**
**75018, Paris (FR)**
• **Rivain, Mathieu**
**75017, Paris (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**DE-A1- 19 822 217**

• **GOLIC J D ET AL: "Multiplicative masking and power analysis of AES", CRYPTOGRAPHIC HARDWARE AND EMBEDDED SYSTEMS - CHES 2002,, 1 janvier 2002 (2002-01-01), pages 198-212, XP009112643,**

**Description**

La présente invention concerne un procédé d'exécution d'un algorithme de protection de données secrètes dans un dispositif électronique tel qu'une carte à puce ou un composant cryptographique. Les données secrètes à protéger sont, par exemple, des variables intervenant dans des opérations réalisées par un algorithme de chiffrement de données. L'invention a également pour objet un dispositif implémentant un tel procédé de protection de données secrètes.

Les opérations exécutées par un dispositif cryptographique engendrent des variations de grandeurs physiques. Ces variations sont différentes en fonction des données traitées, qui peuvent être mesurées par un attaquant, par exemple par le biais d'une mesure de la consommation électrique du dispositif ou de son rayonnement électromagnétique. Un attaquant peut exploiter ces mesures pour obtenir une information sur les données secrètes manipulées au sein du dispositif. Pour se prémunir d'un tel attaquant, le concepteur du dispositif doit adapter les opérations effectuées de sorte que les variations mesurables qu'elles engendrent soient indépendantes des données secrètes.

Une technique connue de l'Homme du métier permettant d'attaquer un dispositif afin de dévoiler les données secrètes qu'il contient est l'attaque dite par canaux auxiliaires. Cette attaque consiste à mesurer la consommation du dispositif et à exploiter cette mesure afin d'en déduire l'information qu'il contient. Afin de se prémunir contre de telles attaques, une méthode de protection connue consiste à combiner toutes les variables x sensibles de l'algorithme implémenté par le dispositif avec une donnée aléatoire r. De cette façon, toute variable intermédiaire manipulée par le dispositif peut s'écrire comme une fonction de x et r, $m_r(x)$. Une des contraintes de cette solution réside dans le fait de s'assurer que x peut être retrouvé à partir de $m_r(x)$ et ce à n'importe quelle étape de l'algorithme considéré. Pour ce faire, toutes les opérations effectuées sur la variable x doivent être adaptées pour prendre en compte la technique de masquage $m_r$.

Concernant les algorithmes de chiffrement de données de type chiffrement par blocs, les données sensibles x manipulées par ce type d'algorithme sont masquées en utilisant la fonction suivante $m_r(x) = x + r$, où r est une variable aléatoire et le signe '+' fait référence à l'opération ou exclusif connu sous l'abréviation XOR.

Cette technique, connue de l'art antérieur, est simple à mettre en oeuvre car toutes les opérations linéaires ou affines exécutées par l'algorithme à protéger peuvent être adaptées de façon immédiate. De plus cette technique est efficace contre des attaques par canaux auxiliaires du premier ordre, c'est-à-dire qui n'utilisent qu'un seul point de mesure, par exemple de la consommation du dispositif.

Un des problèmes principaux de la solution de l'art antérieur par masquage avec une fonction du type $m_r(x) = x + r$ est qu'elle résiste mal aux attaques par canaux auxiliaires d'ordres supérieurs, c'est-à-dire utilisant plusieurs points de mesures au lieu d'un point unique. En effet l'information associée à deux points sur les mesures correspondant au traitement des variables $x_1 + r$ et $x_2 + r$ est fortement corrélée à $x_1 + x_2$ ce qui a pour conséquence une faible résistance aux attaques plus évoluées dites d'ordre k où k est un entier strictement supérieur à 1.

Ce problème peut cependant être résolu en étendant la solution initiale à un nombre k d'aléas de façon à utiliser un masquage du type $m_r(x) = x + r_1 + r_2 + ... + r_k$ où les variables $r_1, r_2, ..., r_k$ sont manipulées séparément. Cette solution, pose toujours le problème d'une attaque exploitant un nombre de points de mesures quelconque, de plus elle engendre un surcout d'implémentation qui est inacceptable en pratique lorsque k est grand. Par ailleurs, il n'existe pas de solution connue pour mettre en oeuvre une telle solution lorsque k est supérieur ou égal à trois.

Aucune solution de l'art antérieur ne permet de résister aux attaques connues à tout ordre k supérieur strictement à 1 et ce pour un surcout de complexité acceptable.

Afin de remédier aux limitations de l'état de l'art, la présente invention propose une solution consistant à masquer toute variable intermédiaire x manipulée par des opérations réalisées au sein du dispositif dont on souhaite protéger le contenu en utilisant des applications affines du type $m(x) = Rx + r$, où R est une matrice inversible binaire. Les opérations réalisées par le dispositif sont adaptées en exploitant les propriétés mathématiques de l'application affine. Cette solution permet, à moindre cout, de résister aux attaques connues d'ordre strictement supérieur à un car les méthodes connues pour inférer les données secrètes en exploitant l'information associée à au moins deux points de mesures correspondant au traitement de données intermédiaires échouent lorsque ces données sont masquées par une application affine contrairement à la solution de l'art antérieur.

L'invention concerne tout dispositif capable de mettre en oeuvre des algorithmes cryptographiques ou des algorithmes comprenant des données secrètes dont on souhaite protéger l'accès contre une personne mal intentionnée. L'invention s'applique en particulier, mais pas exclusivement à un ordinateur, un terminal mobile, une carte à puce. L'invention s'applique également à tout type d'algorithme cryptographique, notamment un algorithme à clé publique ou clé privée,

A cet effet, l'invention a pour objet un procédé d'exécution comportant une étape de protection par masquage affine d'un dispositif électronique, ledit dispositif réalisant des opérations sur des variables secrètes x, lesdites variables x étant des vecteurs binaires de taille donnée N non nulle, ledit procédé étant caractérisé en ce que lesdites variables x sont remplacées, à l'aide d'une opération dite de masquage affine, par la fonction affine suivante : $m(x) = R.x + r$, où R est une matrice binaire inversible aléatoire à N lignes et N colonnes et r est un vecteur binaire aléatoire de taille N.

Dans une variante de réalisation de l'invention, ladite opération de masquage affine d'une variable secrète x est réalisée par l'intermédiaire des étapes suivantes :

- ∘ générer, pour tout vecteur z binaire de taille N, la table T telle que T[z]=Rz+r,
- ∘ remplacer ladite variable secrète x par T[x].

Dans une variante de réalisation de l'invention, ledit dispositif électronique réalise au moins une opération linéaire sur un ensemble de variables secrètes $z_1$, ...,$z_m$ produisant le résultat $z=A_1z_1+A_2z_2+...+A_mz_m$ où les variables $A_1$, $A_2$... $A_m$ sont des matrices qui commutent chacune avec la matrice R et son inverse $R^{-1}$, et l'opération de masquage affine dudit résultat z est effectuée à l'aide des étapes suivantes :

- ∘ appliquer la dite opération de masquage affine sur l'ensemble desdites variables $z_1$, ...$z_m$ afin de produire l'ensemble des variables masquées $\overline{z_1}, \cdots, \overline{z_m}$,
- ∘ déterminer à partir dudit vecteur aléatoire r et d'un deuxième vecteur binaire aléatoire r', un troisième vecteur aléatoire

$$r^{''} = r^{'} + (A_1 + \cdots + A_m)r,$$

- ∘ déterminer le résultat z de l'opération de masquage affine appliquée au résultat z de la dite opération linéaire à l'aide des étapes de calcul suivantes :

$$\overline{z} = A_1 \overline{z_1} + r^{''}$$

Pour i variant de 2 à m

$$\overline{z} = \overline{z} + A_i \overline{z_i}$$

$$\overline{z} = \overline{z} + r + r^{'}$$

Dans une variante de réalisation de l'invention, ledit dispositif électronique réalise au moins une opération linéaire sur un ensemble de variables secrètes $z_1$, ...,$z_m$ de taille N produisant le résultat $z=A_1z_1+A_2z_2+...+A_mz_m$ où les variables $A_1$, $A_2$... $A_m$ sont des matrices qui ne commutent pas avec la matrice R ni avec son inverse $R^{-1}$, et l'opération de masquage affine dudit résultat z est effectuée à l'aide des étapes suivantes :

- ∘ déterminer, pour l'ensemble desdits vecteurs binaires x de taille N, la table $T_R$, telle que $T_R[x]=Rx$,
- ∘ déterminer, pour l'ensemble desdits vecteurs binaires x de taille N, la table $T_R^{-1}$, telle que $T_R^{-1}[x]=R^{-1} x$,
- ∘ déterminer, pour l'ensemble desdits vecteurs binaires x de taille N, les tables $\overline{A_i}$ telles que $\overline{A_i}[x] = T_R [A_i T_{R-1} [x]]$, pour i variant de 1 à m,
- ∘ appliquer la dite opération de masquage affine sur l'ensemble desdites variables $z_1$, ...$z_m$ afin de produire l'ensemble des variables masquées $\overline{z_1}, \cdots, \overline{z_m}$,
- ∘ calculer à partir dudit vecteur aléatoire r et d'un deuxième vecteur binaire aléatoire r' le vecteur binaire $r'' =(\overline{A_1}[r]+...+\overline{A_m}[r])+r'$,
- ∘ déterminer le résultat z de l'opération de masquage affine appliquée au résultat z de la dite opération linéaire à l'aide des étapes de calcul suivantes :

$$\overline{z} = \overline{A_1} [\overline{z_1}] + r^{''}$$

Pour i variant de 2 à m

$$\overline{z} \;=\; \overline{z} \;+\; \overline{A_i[\,\overline{z_i}\,]}$$

$$\overline{z} \;=\; \overline{z} \;+\; r \;+\; r'$$

Dans une variante de réalisation de l'invention, ledit dispositif électronique réalise au moins une opération non linéaire S sur au moins une variable secrète y produisant le résultat $y'=S(y)$ et que l'opération de masquage affine dudit résultat y' est effectuée à l'aide des étapes suivantes :

- ○ appliquer la dite opération de masquage affine sur la variable secrète y afin de produire le résultat $\overline{y} = R{\cdot}y + r$,
- ○ déterminer une opération adaptée S' de l'opération non linéaire S à l'aide de la relation suivante : $S'(\bullet) = R \cdot S(R^{-1} \cdot (\bullet + r)) + r$,
- ○ déterminer le résultat $\overline{y'}$ de l'opération de masquage affine appliquée au résultat y' de ladite opération non linéaire à l'aide de la relation suivante : $\overline{y'} = S'(\overline{y})$

Dans une variante de réalisation de l'invention, ledit dispositif électronique réalise un algorithme cryptographique.

L'invention a également pour objet un dispositif électronique réalisant des opérations sur des variables secrètes x caractérisé en ce qu'il met en oeuvre des moyens pour protéger lesdites variables x à l'aide des étapes du procédé de protection par masquage affine décrit ci-dessus.

Dans une variante de réalisation de l'invention, ledit dispositif est une carte à microcircuit.

D'autres caractéristiques apparaîtront à la lecture de la description détaillée donnée à titre d'exemple et non limitative qui suit faite en regard de dessins annexés qui représentent :

La figure 1a, un diagramme schématisant le procédé selon l'invention de masquage affine appliqué à une transformation linéaire, dans le cas où les matrices $A_1$, ..., $A_m$, coefficients de la transformation linéaire, commutent avec les matrices R et $R^{-1}$,

La figure 1b, un diagramme schématisant le procédé selon l'invention de masquage affine appliqué à une transformation linéaire, dans le cas où les matrices $A_1$, ..., $A_m$, coefficients de la transformation linéaire, ne commutent pas avec les matrices R et $R^{-1}$,

La figure 2, un synoptique d'un premier exemple de dispositif selon l'invention,

La figure 3, un synoptique d'un second exemple de dispositif selon l'invention,

La figure 4, un schéma d'une carte à microcircuit mettant en oeuvre le procédé selon l'invention.

La présente invention consiste, dans le but de résoudre les limitations de l'art antérieur présentées précédemment, à proposer une technique de masquage de données sensibles par l'intermédiaire de fonctions affines. Le procédé selon l'invention concerne notamment l'exécution d'un algorithme de masquage de données dans le but de protéger des données sensibles. La fonction de masquage utilisée dans ce cas pour protéger une variable x est:

$$m(x) = R.x \oplus r \quad , \text{(1)}$$

x est une variable sensible, par exemple manipulée par un algorithme de chiffrement implémenté par un dispositif cryptographique, cette variable est représentée par un vecteur binaire à N composantes, N > 0.

R est une matrice aléatoire, binaire c'est-à-dire qu'elle ne contient que des 0 ou des 1, et inversible de taille NxN,

r est un vecteur aléatoire également binaire de taille N,

$\oplus$ est l'opération « ou exclusif »

Le procédé selon l'invention consiste, notamment, à remplacer une variable x par m(x) afin de la rendre moins vulnérable à une attaque. Cette opération est appelée opération de masquage, et dans le cadre de l'invention, il s'agit de masquage affine.

La mise en oeuvre de ce procédé peut se faire, notamment mais non limitativement, de deux façons différentes.

Dans un premier mode de réalisation, la fonction de masquage affine m(x) est réalisée par l'intermédiaire d'une table de correspondance T[x] dans laquelle est stocké l'ensemble des valeurs de m(x) = R.x $\oplus$ r pour toutes les valeurs de la variable x possibles. Pour un vecteur x comprenant N bits, il y a donc $2^N$ valeurs possibles. La génération de la table de correspondance T[x] comprend donc les étapes suivantes :

- un tirage aléatoire du vecteur binaire r de taille N,
- un tirage aléatoire d'une matrice binaire inversible R de taille NxN,
- le calcul de $m(x) = R.x \oplus r$ pour toutes les valeurs possibles de x.

La mise en oeuvre du masquage affine selon l'invention consiste ensuite, pour une variable sensible x donnée manipulée par le dispositif à protéger, à extraire la valeur m(x) correspondante dans la table T[x].

Dans un second mode de réalisation, la fonction de masquage affine m(x) peut être générée directement lorsqu'on souhaite protéger la variable sensible x. A cet effet, la matrice binaire inversible R et le vecteur binaire r sont générés aléatoirement pour chaque variable x à l'instant où cette variable est utilisée dans l'algorithme de chiffrement.

La variable x manipulée par l'algorithme implémenté peut être l'objet d'opérations linéaires ou non linéaires. Le procédé selon l'invention consiste également à adapter ces opérations afin de masquer leur résultat sans engendrer de calculs trop complexes.

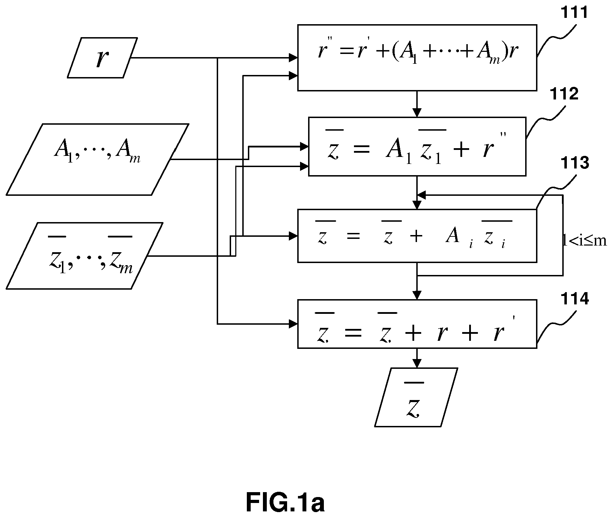

La figure 1a schématise les étapes mises en oeuvre lors du masquage d'une combinaison linéaire de variables masquées dans le cas où les matrices $A_1$, ..., $A_m$ commutent avec les matrices R et $R^{-1}$.

En considérant le cas général de l'opération linéaire définie par la relation suivante :

$$z = A_1 z_1 + A_2 z_2 + \cdots + A_m z_m \quad (2)$$

où $z_1, ... z_m$ sont des variables sensibles de taille N et $\overline{z_1}, \cdots, \overline{z_m}$ représentent leurs versions masquées à l'aide du procédé de masquage affine selon l'invention qui s'écrivent à l'aide de la relation $\overline{z_i} = R.z_i + r$.

Les matrices $A_1, ..., A_m$ sont des matrices binaires inversibles à N lignes et N colonnes.

Dans le cas particulier où les variables $A_1$, ..., $A_m$, $z_1$, ..., $z_m$ peuvent être vues comme des éléments du corps de Galois fini $GF(2^N)$ de cardinal égal à $2^N$, la variable R est obtenue en tirant aléatoirement un élément matriciel inversible de $GF(2^N)$ et la variable r est obtenue en tirant aléatoirement un élément vectoriel de $GF(2^N)$. La table T est générée en tabulant les valeurs de l'application $x \rightarrow m(x) = Rx+r$ pour tous les vecteurs x appartenant à $GF(2^N)$. Dans ce cas les matrices $A_1$, ..., $A_m$ commutent avec les matrices R et $R^{-1}$. On rappelle que la matrice $A_i$ commute avec la matrice R si $A_i R = R A_i$.

La variable z peut alors être masquée en exécutant les étapes de calcul suivantes.

Dans une première étape 111, un aléa r' est généré par tirage aléatoire d'un vecteur dans le corps fini $GF(2^N)$ et la variable r" est calculée à partir de r' et de l'aléa r utilisé pour masquer les variables sensibles $z_1, ... z_m$ selon la relation suivante :

$$r'' = r' + (A_1 + \cdots + A_m)r \quad (3)$$

Dans une deuxième étape 112, le résultat du masquage Z est initialisé :

$$\overline{z} = A_1 \overline{z_1} + r'' \quad (4)$$

Dans une troisième étape 113 itérative la variable masquée Z est mise à jour en effectuant le calcul suivant pour i variant de 2 à m :

$$\overline{z} = \overline{z} + A_i \overline{z_i} \quad (5)$$

Dans une dernière étape 114, la variable z résultat du masquage affine de la combinaison linéaire de m autres variables est délivré :

$$\overline{z} = \overline{z} + r + r^{'} \quad (6)$$

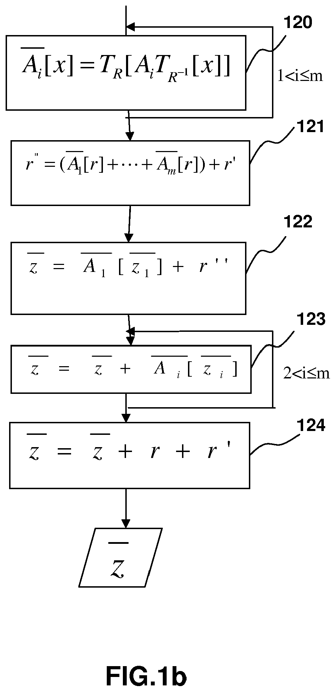

La figure 1b schématise les étapes mises en oeuvre lors du masquage d'une combinaison linéaire de variables masquées dans le cas où les matrices $A_1$, ..., $A_m$ ne commutent pas avec les matrices R et $R^{-1}$.

Lorsque les matrices $A_1$,...,$A_m$ ne commutent pas avec les matrices R et $R^{-1}$, il faut générer en même temps que la table T les tables $T_R$ et $T_{R-1}$ des applications respectivement $x \rightarrow Rx$ et $x \rightarrow R^{-1}x$. La génération des tables $T_R$ et $T_{R-1}$ est réalisée pour un coût marginal en temps d'exécution en parallèle de la génération de la table T.

Dans ce cas la variable z peut être masquée en exécutant les étapes de calcul suivantes.

Dans une étape initiale 120 réalisée une seule fois au démarrage du procédé, les tables $\overline{A_1}$,..., $\overline{A_m}$ sont calculées à partir de $T_R$ et $T_{R-1}$ selon la relation vérifiant :

$$\overline{A_i}[x] = T_R[A_i T_{R^{-1}}[x]] \quad (7)$$

pour tout $1 \le i \le m$.

Dans une première étape 121, un aléa r' est généré à partir du corps fini $GF(2^N)$ et la variable r'' est calculée à partir de r', des tables $\overline{A_1}$,..., $\overline{A_m}$, et de l'aléa r utilisé pour masquer les variables sensibles $z_1$,...$z_m$ selon la relation suivante :

$$r^{''} = (\overline{A_1}[r] + \cdots + \overline{A_m}[r]) + r^{'} \quad (8)$$

Dans une deuxième étape 122, le résultat du masquage Z est initialisé selon la relation suivante:

$$\overline{z} = \overline{A_1}[\overline{z_1}] + r^{''} \quad (9)$$

Dans une troisième étape 123 itérative la variable masquée Z est mise à jour en effectuant le calcul suivant pour i variant de 2 à m :

$$\overline{z} = \overline{z} + \overline{A_i}[\overline{z_i}] \quad (10)$$

Dans une dernière étape 124, la variable z résultat 104 du masquage affine de la combinaison linéaire de m autres variables est délivré :

$$\overline{z} = \overline{z} + r + r^{'} \quad (11)$$

Ainsi, le procédé selon l'invention permet une exécution optimisée du masquage affine d'opérations linéaires.

Le masquage affine du résultat de transformations non linéaires, qui peuvent également être implémentées par un algorithme de chiffrement, est traité par le procédé de masquage selon l'invention de la façon suivante. Soit S est une opération non linéaire qui relie la variable y à la variable y' selon la relation suivante :

$$y' = S(y) \quad (12)$$

y étant une variable sensible et $\overline{y}$ sa version masquée à l'aide du procédé de masquage affine selon l'invention qui s'écrit à l'aide de la relation

$$\overline{y} = R \cdot y + r \,.$$

On cherche alors à calculer la version masquée $\overline{y'}$ de y'.

Dans une première étape, une version adaptée S' de l'opération linéaire S est calculée, définie par la relation suivante :

$$S'(\bullet) = R \cdot S\left(R^{-1} \cdot (\bullet + r)\right) + r \quad (13)$$

Dans une deuxième étape, le résultat de l'opération $\overline{y'}$ est délivré en appliquant l'opération S' à la variable masquée $\overline{y}$ :

$$\overline{y'} = S'\left(\overline{y}\right) \quad (14)$$

La génération de la matrice aléatoire inversible R utilisée par le procédé de masquage affine selon l'invention doit être efficace d'un point de vue de la complexité des calculs mis en oeuvre afin de ne pas engendrer de surcout important pour l'implémentation. De plus la matrice R doit répondre à un critère de sécurité, le nombre de matrices R générées aléatoirement doit être suffisamment important afin d'empêcher toute attaque ayant pour but de retrouver le schéma de masquage.

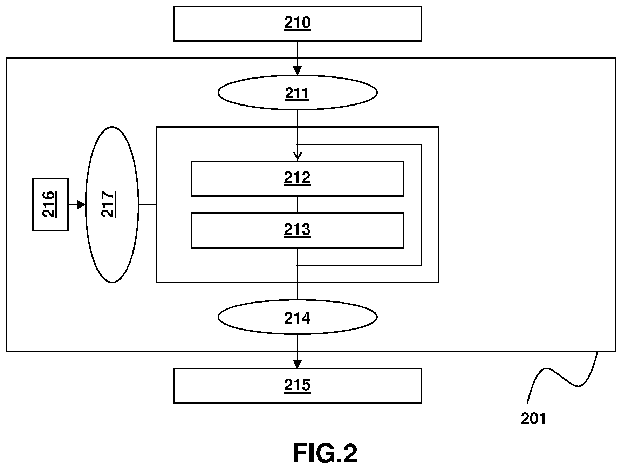

La figure 2 schématise un exemple de dispositif 201 selon l'invention protégé par une ou plusieurs opérations de masquage affine selon l'invention. Ce dispositif réalise, par exemple, un algorithme de chiffrement. Un message 210 est reçu en entrée du dispositif 201. Ce message subit une première opération de masquage affine 211 afin de le rendre ininterprétable. Le message 210 masqué selon l'invention subit ensuite une série d'opérations linéaires 212 et d'opérations non linéaires 213 qui sont propres aux traitements nativement implémentés sur ledit dispositif 201 mais qui sont adaptées selon l'invention afin de délivrer à leur sortie un message masqué compatible du procédé selon l'invention. En parallèle, une clé 216, par exemple une clé de chiffrement, est reçue par le dispositif 201 et subit également une opération 217 de masquage affine selon l'invention. Les variables internes manipulées par le dispositif 201 sont ainsi protégées d'une éventuelle attaque par canaux auxiliaires. Le message 210 masqué puis manipulé par les opérations linéaires et non linéaires exécutées sur le dispositif 201 est ensuite démasqué 214 par une opération inverse de celle consistant à remplacer une variable sensible par sa version masquée, puis le message chiffré 215 est délivré en sortie.

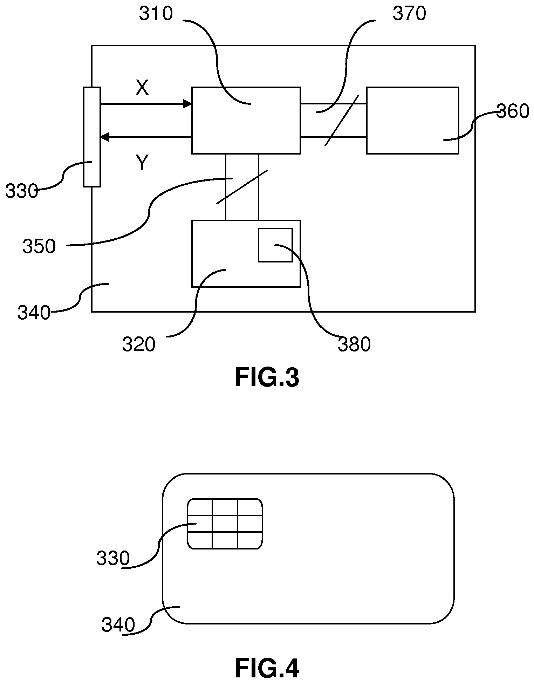

La figure 3 représente, schématiquement, un dispositif de traitement de données 340 dans lequel la présente invention est mise en oeuvre. Ce dispositif 340 comprend un microprocesseur 310, auquel est associée d'une part une mémoire vive 360, par exemple au moyen d'un bus 370, et d'autre part une mémoire non volatile 320 (par exemple du type EEPROM), par exemple à travers un bus 50.

Le dispositif de traitement de données 340, et précisément le microprocesseur 310 qu'il incorpore, peuvent échanger des données avec des dispositifs extérieurs au moyen d'une interface de communication 330.

On a schématiquement représenté sur la figure 3 la transmission d'une donnée d'entrée X reçue d'un dispositif extérieur (non représenté) et transmise de l'interface de communication 330 au microprocesseur 310. De manière similaire, on a représenté la transmission d'une donnée de sortie S du microprocesseur 310 vers l'interface de communication 330 à destination d'un dispositif extérieur. Cette donnée de sortie Y est issue d'un traitement de données par le microprocesseur 310, généralement sur la donnée d'entrée X à l'aide d'une donnée secrète 380 interne au système, par exemple une clé privée.

Bien que, pour l'illustration, les données d'entrée et les données de sortie figurent sur deux flèches différentes, les moyens physiques qui permettent la communication entre le microprocesseur 310 et l'interface 330 pourront être réalisés par des moyens uniques, par exemple un port de communication série ou un bus.

Le microprocesseur 310 est apte à exécuter un logiciel (ou programme d'ordinateur) qui permet au dispositif de traitement de données 340 d'exécuter un procédé conforme à l'invention dont des exemples sont donnés en regard des figures 1a et 1b. Le logiciel est composé d'une série d'instructions de commande du microprocesseur 310 qui sont par exemple stockées dans la mémoire 320.

En variante, l'ensemble microprocesseur 310 - mémoire non-volatile 320 - mémoire vive 360 peut être remplacé par un circuit à application spécifique qui comprend alors des moyens de mise en oeuvre des différentes étapes du procédé de traitement de données.

La figure 4 représente une carte à microcircuit qui constitue un exemple de dispositif de traitement de données conforme à l'invention tel que représenté à la figure 3. L'interface de communication 330 est dans ce cas réalisée au moyen des contacts de la carte à microcircuit. La carte à microcircuit incorpore un microprocesseur 310, une mémoire vive 360 et une mémoire non volatile 320 comme cela est représenté sur la figure 3.

EP 2 302 552 B1

Cette carte à microcircuit est par exemple conforme à la norme ISO 7816 et munie d'un microcontrôleur sécurisé qui regroupe le microprocesseur (ou CPU) 320 et la mémoire vive 360.

En variante, le dispositif de traitement de données peut être une clef USB, un document ou un support d'informations papier comportant dans l'une de ses feuilles un microcircuit associé à des moyens de communication sans contact. Il s'agit de manière préférée d'une entité électronique portable ou de poche.

Le procédé selon l'invention a notamment pour avantage d'être peu complexe à mettre en oeuvre tout en restant compatible des opérations linéaires et non linéaires effectuées sur les variables sensibles protégées selon l'invention.

L'invention a également pour avantage d'offrir des résultats significativement meilleurs que les solutions connues de l'état de l'art pour des attaques connues par canaux auxiliaires d'ordre supérieur à 2.

En effet, la solution de l'art antérieur consistant à utiliser un masquage à base d'opérations « XOR » ne résiste pas à des attaques par canaux auxiliaires du second ordre. Cela est du au fait que pour toute variable sensible x, un attaquant peut trouver deux variables intermédiaires $v_1$ et $v_2$ telles que x= $v_1 \oplus v_2$ et la consommation C(x) associée à la variable x peut être prédite à partir de $|C(v_1) - C(v_2)|$. Par contre, une telle prédiction n'est plus possible si les variables $v_1$ et $v_2$ sont masquées à l'aide d'un procédé de masquage affine selon l'invention. En effet, la corrélation de C(x) avec $IC(v_1) - C(v_2)|$ décroit rapidement avec la taille n du vecteur x comme cela est illustré à la table 1.2. Le même type de conclusion peut être obtenu lorsqu'on cherche à prédire C(x) à partir de $C(v_1) \times C(v_2)$ tel que cela est indiqué dans la table 1.2.

Soit $x_1$ et $x_2$ deux variables aléatoires uniformément distribuées dans l'espace $\{0,1\}^n$. La table 1.1 compare les corrélations entre x= $x_1 \oplus x_2$ et les variables $x_1$ et $x_2$ masquées par une méthode de masquage de type « XOR ». Les métriques utilisées pour effectuer une analyse des performances de cette méthode sont les suivantes :

$$Cor\left(\left|HW(x_1 \oplus r) - HW(x_2 \oplus r)\right|^\beta ; HW(x)\right) \quad (15)$$

et

$$Cor\left(\left|HW(x_1 \oplus r).HW(x_2 \oplus r)\right|^\beta ; HW(x)\right) \quad (16)$$

où HW(x) représente le poids de Hamming du vecteur x.

**Table 1.1**

| n | $Cor(|HW(x_1 \oplus r)-HW(x_2 \oplus r)|^\beta ; HW(x))$ | | | $Cor(|HW(x_1 \oplus r).HW(x_2 \oplus r)|^\beta; HW(x))$ | | |
|---|---|---|---|---|---|---|
| | $\beta=1$ | $\beta=2$ | $\beta=3$ | $\beta=1$ | $\beta=2$ | $\beta=3$ |
| 1 | 1 | 1 | 1 | -0,578007 | -0,579426 | -0,579963 |
| 2 | 0,532322 | 0,579113 | 0,568336 | -0,315755 | -0,366913 | -0,368015 |
| 3 | 0,411518 | 0,452034 | 0,438087 | -0,217523 | -0,284781 | -0,293768 |
| 4 | 0,351401 | 0,381051 | 0,368472 | -0,169834 | -0,233549 | -0,249807 |
| 5 | 0,304950 | 0,333761 | 0,324023 | -0,137339 | -0,198963 | -0,217753 |
| 6 | 0,279849 | 0,302910 | 0,291607 | -0,117385 | -0,173757 | -0,197643 |
| 7 | 0,258828 | 0,276712 | 0,268064 | -0,101258 | -0,151014 | -0,179686 |
| 8 | 0,236417 | 0,261128 | 0,249791 | -0,087109 | -0,136167 | -0,164959 |

La table 2.1 présente les mêmes résultats mais cette fois appliqués au procédé de masquage affine selon l'invention, les métriques utilisées sont les suivantes :

$$Cor\left(\left|HW(Rx_1 \oplus r) - HW(Rx_2 \oplus r)\right|^\beta ; HW(x)\right) \quad (17)$$

8

et

$$Cor(|HW(Rx_1 \oplus r).HW(Rx_2 \oplus r)|^{\beta}; HW(x)) \quad (18)$$

**Table 2.2**

| n | $Cor(|HW(Rx_1 \oplus r)-HW(Rx_2 \oplus r)|^{\beta}; HW(x))$ | | | $Cor(|HW(Rx_1 \oplus r).HW(Rx_2 \oplus r)|^{\beta}; HW(x))$ | | |
|---|---|---|---|---|---|---|
| | $\beta=1$ | $\beta=2$ | $\beta=3$ | $\beta=1$ | $\beta=2$ | $\beta=3$ |
| 1 | 1 | 1 | 1 | -0,574882 | -0,573609 | -0,579249 |
| 2 | 0,535827 | 0,386256 | 0,285722 | -0,209768 | -0,270511 | -0,316286 |
| 3 | 0,298929 | 0,191070 | 0,136149 | -0,090795 | -0,137604 | -0,164889 |
| 4 | 0,162631 | 0,103208 | 0,070132 | -0,043678 | -0,067954 | -0,080933 |
| 5 | 0,091369 | 0,051445 | 0,034176 | -0,021675 | -0,035601 | -0,040952 |
| 6 | 0,053028 | 0,030678 | 0,025059 | -0,009192 | -0,017957 | -0,019982 |
| 7 | 0,030603 | 0,014429 | 0,010588 | -0,006485 | -0,006548 | -0,011328 |
| 8 | 0,011109 | 0,006532 | 0,004693 | -0,002205 | -0,002554 | -0,006627 |

Les tables 1.1 et 1.2 montrent que les métriques considérées décroissent fortement lorsque n augmente dans le cas du procédé de masquage affine selon l'invention. Les métriques définies à l'aide des relations 15,16,17 et 18 utilisent le poids de Hamming d'une variable x car il est connu d'approximer la consommation électrique liée à la variable x avec le poids de Hamming de cette même variable x.

Ces résultats indiquent que l'information associée à deux (ou d'avantage) points sur les mesures correspondant au traitement de données intermédiaires de la forme $Rx_1+r$ et $Rx_2+r$ est beaucoup plus faiblement corrélée à $x_1+x_2$ que dans la solution de l'art antérieur présentée. L'invention permet donc de résister à des attaques connues d'ordre strictement supérieur à 1.

## Revendications

1. Procédé d'exécution comportant une étape de protection par masquage affine d'un dispositif électronique, ledit dispositif réalisant des opérations sur des variables secrètes x, lesdites variables x étant des vecteurs binaires de taille donnée N non nulle, ledit procédé étant **caractérisé en ce que** lesdites variables x sont remplacées, à l'aide d'une opération dite de masquage affine, par la fonction affine suivante : m(x) = R.x + r, où R est une matrice binaire inversible aléatoire à N lignes et N colonnes et r est un vecteur binaire aléatoire de taille N, l'opérateur + désignant l'opérateur « ou exclusif ».

2. Procédé selon la revendication 1 **caractérisé en ce que** ladite opération de masquage affine d'une variable secrète x est réalisée par l'intermédiaire des étapes suivantes :

   ◦ générer, pour tout vecteur z binaire de taille N, la table T telle que

$$T[z]=Rz+r,$$

   ◦ remplacer ladite variable secrète x par T[x].

3. Procédé selon l'une des revendications 1 ou 2 **caractérisé en ce que** ledit dispositif électronique réalise au moins une opération linéaire sur un ensemble de variables secrètes $z_1, ...,z_m$ produisant le résultat $z=A_1z_1+A_2z_2+...+A_mz_m$ où les variables $A_1, A_2... A_m$ sont des matrices qui commutent chacune avec la matrice R et son inverse $R^{-1}$, et que l'opération de masquage affine dudit résultat z est effectuée à l'aide des étapes suivantes :

∘ appliquer la dite opération de masquage affine sur l'ensemble desdites variables $z_1, ...z_m$ afin de produire l'ensemble des variables masquées $\overline{z_1}, \cdots, \overline{z_m}$,

∘ déterminer à partir dudit vecteur aléatoire r et d'un deuxième vecteur binaire aléatoire r', un troisième vecteur aléatoire

$$r'' = r' + (A_1 + \cdots + A_m)r,$$

∘ déterminer le résultat z de l'opération de masquage affine appliquée au résultat z de la dite opération linéaire à l'aide des étapes de calcul suivantes :

$$\overline{z} = A_1 \overline{z_1} + r''$$

Pour i variant de 2 à m

$$\overline{z} = \overline{z} + A_i \overline{z_i}$$

$$\overline{z} = \overline{z} + r + r'$$

4. Procédé selon l'une des revendications 1 ou 2 **caractérisé en ce que** ledit dispositif électronique réalise au moins une opération linéaire sur un ensemble de variables secrètes $z_1, ...,z_m$ de taille N produisant le résultat $z=A_1z_1+A_2z_2+...+A_mz_m$ où les variables $A_1, A_2... A_m$ sont des matrices qui ne commutent pas avec la matrice R ni avec son inverse $R^{-1}$, et que l'opération de masquage affine dudit résultat z est effectuée à l'aide des étapes suivantes :

∘ déterminer, pour l'ensemble desdits vecteurs binaires x de taille N, la table $T_R$, telle que $T_R[x]=R.x$,
∘ déterminer, pour l'ensemble desdits vecteurs binaires x de taille N, la table $T_R^{-1}$, telle que $T_R^{-1}[x]=R^{-1} x$,
∘ déterminer, pour l'ensemble desdits vecteurs binaires x de taille N, les tables $\overline{A_i}$ telles que $\overline{A_i}[x] = T_R [A_i T_{R-1} [x]]$, pour i variant de 1 à m,
∘ appliquer la dite opération de masquage affine sur l'ensemble desdites variables $z_1, ...z_m$ afin de produire l'ensemble des variables masquées $\overline{z_1}, \cdots, \overline{z_m}$,
∘ calculer à partir dudit vecteur aléatoire r et d'un deuxième vecteur binaire aléatoire r' le vecteur binaire $r'' = (\overline{A_1}[r]+\cdots+\overline{Am}[r])+r'$,
∘ déterminer le résultat z de l'opération de masquage affine appliquée au résultat z de la dite opération linéaire à l'aide des étapes de calcul suivantes :

$$\overline{z} = \overline{A_1} [\overline{z_1}] + r''$$

Pour i variant de 2 à m

$$\overline{z} = \overline{z} + \overline{A_i} [\overline{z_i}]$$

$$\overline{z} = \overline{z} + r + r'$$

5. Procédé selon l'une des revendications 1 ou 2 **caractérisé en ce que** ledit dispositif électronique réalise au moins une opération non linéaire S sur au moins une variable secrète y produisant le résultat $y' = S(y)$ et que l'opération de masquage affine dudit résultat y' est effectuée à l'aide des étapes suivantes :

∘ appliquer la dite opération de masquage affine sur la variable secrète y afin de produire le résultat *y = R·y + r*,
∘ déterminer une opération adaptée S' de l'opération non linéaire S à l'aide de la relation suivante : *S'(●) = R·S(R⁻¹·(●+ r))+r*,
∘ déterminer le résultat $\overline{y'}$ de l'opération de masquage affine appliquée au résultat y' de ladite opération non linéaire à l'aide de la relation suivante : $\overline{y'} = S'(\overline{y})$

6. Procédé selon l'une des revendications 1 à 5 **caractérisé en ce que** ledit dispositif électronique réalise un algorithme cryptographique.

7. Dispositif électronique réalisant des opérations sur des variables secrètes x **caractérisé en ce qu'**il met en oeuvre des moyens pour protéger lesdites variables x à l'aide des étapes du procédé de protection par masquage affine selon l'une des revendications 1 à 6.

8. Dispositif électronique selon la revendication 7 **caractérisé en ce que** ledit dispositif est une carte à microcircuit.


**Patentansprüche**

1. Ausführungsverfahren, das einen Schritt des Schützens einer elektronischen Vorrichtung durch affine Maskierung beinhaltet, wobei die Vorrichtung Operationen an geheimen Variablen x durchführt, wobei die Variablen x binäre Vektoren mit einer gegebenen Größe N von ungleich null sind, wobei das Verfahren **dadurch gekennzeichnet ist, dass** die Variablen x mit Hilfe eines als affine Maskierung bezeichneten Vorgangs durch die folgende affine Funktion ersetzt werden: m(x) = R.x + r, wobei R eine zufällige umkehrbare binäre Matrix mit N Reihen und N Spalten ist und r ein zufälliger binärer Vektor mit der Größe N ist, wobei der Operator + den Operator "exklusiv-oder" bezeichnet.

2. Verfahren nach Anspruch 1, **dadurch gekennzeichnet, dass** der Vorgang der affinen Maskierung einer geheimen Variablen x mittels der folgenden Schritte erfolgt:

   ∘ Erzeugen, für jeden binären Vektor z der Größe N, der Tabelle T, so dass T[z]=Rz+r ist,
   ∘ Ersetzen der geheimen Variablen x durch T[x].

3. Verfahren nach Anspruch 1 oder 2, **dadurch gekennzeichnet, dass** die elektronische Vorrichtung wenigstens einen linearen Vorgang an einem Satz von geheimen Variablen $z_1$, ..., $z_m$ durchführt, der das Ergebnis $z = A_1 z_1 + A_2 z_2 + ... + A_m z_m$ ergibt, wobei die Variablen $A_1$, $A_2$... $A_m$ Matrizen sind, die jeweils mit der Matrix R und ihrer Umkehr $R^{-1}$ kommutieren, und der Vorgang der affinen Maskierung des Ergebnisses z mit Hilfe der folgenden Schritte erfolgt:

   ∘ Anwenden des Vorgangs der affinen Maskierung auf den Satz der Variablen $z_1$, ...$z_m$, um den Satz von maskierten Variablen $\overline{z_1}, ..., \overline{z_m}$ zu erzeugen,
   ∘ Bestimmen, auf der Basis des Zufallsvektors r und eines zweiten zufälligen binären Vektors r', eines dritten Zufallsvektors $r'' = r' + (A_1 + ... + A_m)r$,
   ∘ Bestimmen des Ergebnisses $\overline{z}$ des Vorgangs der affinen Maskierung, der auf das Ergebnis z des linearen Vorgangs angewendet wird, mit Hilfe der folgenden Rechenschritte:

$$\overline{z} = A_1 \overline{z_1} + r''$$

für i von 2 bis m variierend

$$\overline{z} = \overline{z} + A_i \overline{z_i}$$

$$\overline{z} = \overline{z} + r + r'$$

4. Verfahren nach Anspruch 1 oder 2, **dadurch gekennzeichnet, dass** die elektronische Vorrichtung wenigstens einen linearen Vorgang an einem Satz von geheimen Variablen $z_1$, ..., $z_m$ der Größe N ausführt, der das Ergebnis

$z = A_1 z_1 + A_2 z_2 + ... + A_m z_m$ ergibt, wobei die Variablen $A_1$, $A_2$... $A_m$ Matrizen sind, die weder mit der Matrix R noch ihrer Umkehr $R^{-1}$ kommutieren, und der Vorgang der affinen Maskierung des Ergebnisses z mit Hilfe der folgenden Schritte erfolgt:

- Bestimmen, für den Satz der binären Vektoren x der Größe N, der Tabelle $T_R$, so dass $T_R[x] = R.x$ ist,
- Bestimmen, für den Satz der binären Vektoren x der Größe N, der Tabelle $T_R^{-1}$, so dass $T_R^{-1}[x] = R^{-1} x$ ist,
- Bestimmen, für den Satz der binären Vektoren x der Größe N, der Tabellen $\overline{A_i}$, so dass $\overline{A_i}[x] = T_R [A_i T_{R-1}[x]]$ ist, für i im Bereich von 1 bis m,
- Anwenden des Vorgangs der affinen Maskierung auf den Satz der Variablen $z_1$, ...$z_m$, um den Satz von maskierten Variablen $\overline{z_1}, \cdots, \overline{z_m}$ zu erzeugen,
- Berechnen, auf der Basis des Zufallsvektors r und eines zweiten binären Zufallsvektors r', des binären Vektors $r'' = (\overline{A_1}[r] + \cdots + \overline{A_m}[r]) + r'$,
- Bestimmen des Ergebnisses $\overline{z}$ des Vorgangs der affinen Maskierung, angewendet auf das Ergebnis z des linearen Vorgangs, mit Hilfe der folgenden Rechenschritte:

$$\overline{z} = \overline{A_1}[\overline{z_1}] + r''$$

für i von 2 bis m variierend:

$$\overline{z} = \overline{z} + \overline{A_i}[\overline{z_i}]$$

$$\overline{z} = \overline{z} + r + r$$

5. Verfahren nach Anspruch 1 oder 2, **dadurch gekennzeichnet, dass** die elektronische Vorrichtung wenigstens einen nichtlinearen Vorgang S auf wenigstens eine geheime Variable y anwendet, die das Ergebnis $y' = S(y)$ produziert, und der Vorgang der affinen Maskierung des Ergebnisses y' mit Hilfe der folgenden Schritte erfolgt:

- Anwenden des Vorgangs der affinen Maskierung auf die geheime Variable y, um das Ergebnis $\overline{y} = R \cdot y + r$ zu produzieren,
- Feststellen eines adaptierten Vorgangs S' des nichtlinearen Vorgangs S mit Hilfe der folgenden Relation: $S'(\bullet) = R \cdot S(R^{-1} \cdot (\bullet + r)) + r$,
- Bestimmen des Ergebnisses $\overline{y'}$ des Vorgangs der affinen Maskierung, angewendet auf das Ergebnis y' des nichtlinearen Vorgangs mit Hilfe der folgenden Relation: $\overline{y'} = S' (\overline{y})$.

6. Verfahren nach einem der Ansprüche 1 bis 5, **dadurch gekennzeichnet, dass** die elektronische Vorrichtung einen kryptografischen Algorithmus durchführt.

7. Elektronische Vorrichtung, die Vorgänge an geheimen Variablen x durchführt, **dadurch gekennzeichnet, dass** sie Mittel zum Schützen der Variablen x mit Hilfe der Schritte des Verfahrens zum Schützen durch affine Maskierung nach einem der Ansprüche 1 bis 6 implementiert.

8. Elektronische Vorrichtung nach Anspruch 7, **dadurch gekennzeichnet, dass** die Vorrichtung eine Mikroschaltungskarte ist.

## Claims

1. A method of execution including a step of protecting an electronic device by affine masking, said device executing operations on secret variables x, said variables x being binary vectors of a given size N other than zero, said method being **characterised in that** said variables x are replaced, with the aid of a so-called affine masking operation, by the following affine function: m(x) = R.x + r, where R is a random invertible binary matrix with N rows and N columns and r is a random binary vector of size N, the operator + designating the "exclusive or" operator.

2. The method according to Claim 1, **characterised in that** said operation of the affine masking of a secret variable x is executed by means of the following steps:

  ◦ generate, for each binary vector z of size N, the table T such that T[z]=Rz+r,
  ◦ replace said secret variable x with T[x].

3. The method according to either of Claims 1 or 2, **characterised in that** said electronic device executes at least one linear operation on a set of secret variables $z_1$, ...,$z_m$, producing the result $z=A_1z_1+A_2z_2+...+A_mz_m$, where the variables $A_1$, $A_2$... $A_m$ are matrices, each of which commutes with the matrix R and its inverse $R^{-1}$, and that the operation of the affine masking of said result z is carried out with the aid of the following steps:

  ◦ apply said operation of affine masking to the set of said variables $z_1$, ...$z_m$ in order to produce the set of masked variables $\overline{z_1},\cdots,\overline{z_m}$,
  ◦ determine, from said random vector r and from a second random binary vector r', a third random vector $r''=r' + (A_1 +...+A_m)r$,
  ◦ determine the result $\overline{z}$ of the affine masking operation applied to the result z of said linear operation with the aid of the following calculation steps:

$$\overline{z} = A_1 \overline{z_1} + r''$$

for i varying from 2 to m

$$\overline{z} = \overline{z} + A_i \overline{z_i}$$

$$\overline{z} = \overline{z} + r + r'$$

4. The method according to either of Claims 1 or 2, **characterised in that** said electronic device executes at least one linear operation on a set of secret variables $z_1$, ..., $z_m$ of size N, producing the result $z=A_1z_1+A_2z_2+...+A_mz_m$, where the variables $A_1$, $A_2$... $A_m$ are matrices which do not commute with either the matrix R or its inverse $R^{-1}$, and that the operation of the affine masking of said result z is executed with the aid of the following steps:

  ◦ determine, for the set of said binary vectors x of size N, the table $T_R$, such that $T_R[x]=R.x$,
  ◦ determine, for the set of said binary vectors x of size N, the table $T_R^{-1}$, such that $T_R^{-1}[x]=R^{-1} x$,
  ◦ determine, for the set of said binary vectors x of size N, the tables $\overline{A_i}$ such that $\overline{A_i}[x] = T_R[A_iT_{R-1} [x]]$, for i varying from 1 to m,
  ◦ apply said operation of affine masking to the set of said variables $z_1$, ...$z_m$ in order to produce the set of masked variables $\overline{z_1},\cdots,\overline{z_m}$,
  ◦ calculate, from said random vector r and from a second random binary vector r', the binary vector $r''=(A_1[\overline{r}]+\cdots+\overline{A_m}[\overline{r}])+r'$
  ◦ determine the result $\overline{z}$ of the affine masking operation applied to the result z of said linear operation with the aid of the following calculation steps:

$$\overline{z} = \overline{A_1} [ \overline{z_1} ] + r''$$

for i varying from 2 to m,

$$\overline{z} = \overline{z} + \overline{A_i} [ \overline{z_i} ]$$

$$\overline{z} = \overline{z} + r + r'$$

5. The method according to either of Claims 1 or 2, **characterised in that** said electronic device executes at least one non-linear operation S on at least one secret variable y, producing the result $y'=S(y)$, and **in that** the operation of affine masking of said result y' is executed with the aid of the following steps:

- apply said affine masking operation to the secret variable y in order to produce the result $\overline{y} = R \cdot y + r$,
- determine an adapted operation S' of the non-linear operation S with the aid of the following relation: $S'(\bullet) = R \cdot S(R^{-1} \cdot (\bullet + r)) + r$,
- determine the result $\overline{y'}$ of the affine masking operation applied to the result y' of said non-linear operation with the aid of the following relation:

$$\overline{y'} = S'\left(\overline{y}\right).$$

6.  The method according to any of Claims 1 to 5, **characterised in that** said electronic device executes a cryptographic algorithm.

7.  An electronic device executing operations on secret variables x, **characterised in that** it implements means for protecting said variables x with the aid of the steps of the affine masking protection method according to any of Claims 1 to 6.

8.  The electronic device according to Claim 7, **characterised in that** said device is a microcircuit card.

**111**

$$r^{''} = r^{'} + (A_1 + \cdots + A_m)r$$

**112**

$$\overline{z} = A_1 \overline{z_1} + r^{''}$$

**113**

$$\overline{z} = \overline{z} + A_i \overline{z_i}$$

$1 < i \leq m$

**114**

$$\overline{z} = \overline{z} + r + r^{'}$$

$r$

$A_1, \cdots, A_m$

$\overline{z_1}, \cdots, \overline{z_m}$

$\overline{z}$

**FIG.1a**

$$\overline{A_i}[x] = T_R[A_i T_{R^{-1}}[x]]$$ **120**

$1 < i \le m$

$$r'' = (\overline{A_1}[r] + \cdots + \overline{A_m}[r]) + r'$$ **121**

$$\overline{z} = \overline{A_1}[\overline{z_1}] + r''$$ **122**

$$\overline{z} = \overline{z} + \overline{A_i}[\overline{z_i}]$$ **123**

$2 < i \le m$

$$\overline{z} = \overline{z} + r + r'$$ **124**

$$\overline{z}$$

**FIG.1b**

**FIG.2**

310                    370

X

330

Y

350

340                    360

320        380

**FIG.3**

330

340

**FIG.4**